# EUROPEAN PATENT APPLICATION

(11) **EP 4 057 683 A1**
(43) Date of publication of application: **14.09.2022**
(21) Application number: 20905406.3
(22) Date of filing: 16.12.2020
(51) Int. Cl.: H04W 28/02, H04W 24/08

(54) **CELL CONGESTION PROCESSING METHOD, TERMINAL AND NETWORK SIDE DEVICE**

(30) Priority: 23.12.2019 CN 201911339778
(71) Applicant: Vivo Mobile Communication Co., Ltd., Dongguan, Guangdong 523863 (CN)
(72) Inventor: HE, Yi, Dongguan, Guangdong 523863 (CN); SUN, Yanliang, Dongguan, Guangdong 523863 (CN); SU, Weihsin, Dongguan, Guangdong 523863 (CN)
(74) Representative: Murgitroyd & Company
(86) International application number: PCT/CN2020/136739
(87) International publication number: WO 2021/129478

(57) **Abstract**

Embodiments of the present invention provide a cell congestion processing method, a terminal, and a network side device. The method includes: receiving congestion indication information sent by a network side device, where the congestion indication information is used to indicate that a first cell is congested; and accessing, by the terminal, a second cell based on the congestion indication information.

## Description

### CROSS-REFERENCE TO RELATED APPLICATION

This application claims priority to Chinese Patent Application No. 201911339778.4 filed in China on December 23, 2019, which is incorporated herein by reference in its entirety.

### TECHNICAL FIELD

The present invention relates to the field of communications technologies, and in particular, to a cell congestion processing method, a terminal, and a network side device.

### BACKGROUND

In an existing network, when a service volume of a cell in Long Term Evolution (Long Term Evolution, LTE) is large, congestion potentially occurs when a terminal camps on the cell, and consequently, a terminal cannot normally perform a data service, which obviously affects user experience.

In a connected state, the terminal measures signal strength of a serving cell and a neighboring cell. After a handover event configured by a network is met, the terminal performs measurement reporting, and the network delivers a handover instruction to the terminal so that the terminal hand over to a new cell. In an idle state, the terminal determines cell reselection by using a reselection optimization level, reference signal receiving power (Reference Signal Receiving Power, RSRP), and the like. However, in the following cases, a cell has a better signal, but a large quantity of users camp on the cell, and a service volume is large. If the terminal is handed over to the cell again, normal data services are affected.

In addition, some other congestion avoidance mechanisms defined in LTE are mostly semi-static mechanisms. Abase station cannot perform updating in real time based on a scheduling status. Scheduling behavior of the base station is not only affected by an air interface propagation environment, but is also affected by arrival of uplink and downlink data packets. Especially, arrival of downlink data packets is related to a congestion degree of a propagation environment of a core network. Therefore, introducing a semi-static scheduling limitation to the base station may affect scheduling efficiency and have a negative effect on a network capacity.

Carrier aggregation (Carrier Aggregation, CA) or dual-connectivity (Dual-Connectivity, DC) is a method for resolving congestion, but a requirement for a capability of the terminal is higher.

### SUMMARY

Embodiments of the present invention provide a cell congestion processing method, a terminal, and a network side device, to resolve a problem that there is a relatively high requirement for a terminal capability in an existing congestion solution.

To resolve the foregoing technical problem, the embodiments of the present invention are implemented as follows: A cell congestion processing method is applied to a terminal, and includes:
receiving congestion indication information sent by a network side device, where the congestion indication information is used to indicate that a first cell is congested; and
accessing, by the terminal, a second cell based on the congestion indication information.

An embodiment of the present invention further provides a cell congestion processing method, applied to a network side device and including:
sending congestion indication information to a terminal, where the congestion indication information is used to indicate that a first cell is congested.

An embodiment of the present invention further provides a terminal, including:
a receiving module, configured to receive congestion indication information sent by a network side device, where the congestion indication information is used to indicate that a first cell is congested; and
an access module, configured to access, by the terminal, a second cell based on the congestion indication information.

An embodiment of the present invention further provides a terminal, including a processor, a memory, and a computer program stored in the memory and executable on the processor, and when the computer program is executed by the processor, steps of the foregoing cell congestion processing method are implemented.

An embodiment of the present invention further provides a network side device, including:
a sending module, configured to send congestion indication information to a terminal, where the congestion indication information is used to indicate that a first cell is congested.

An embodiment of the present invention further provides a network side device, including a processor, a memory, and a computer program stored in the memory and executable on the processor, and when the computer program is executed by the processor, steps of the foregoing cell congestion processing method are implemented.

An embodiment of the present invention provides a computer-readable storage medium, where the computer-readable storage medium stores a computer program, and when the computer program is executed by a processor, steps of the foregoing cell congestion processing method are implemented.

In the embodiments of the present invention, the congestion indication information sent by the network side device indicates that the first cell is congested. The terminal accesses a new cell based on the congestion indication information, so that the terminal can be prevented from accessing a congested cell and user data experience can be improved.

### BRIEF DESCRIPTION OF DRAWINGS

To describe the technical solutions of the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic architectural diagram of a wireless communications system according to an embodiment of the present invention;
FIG. 2 is a first flowchart of steps of a cell congestion processing method according to an embodiment of the present invention;
FIG. 3 is a second flowchart of steps of a cell congestion processing method according to an embodiment of the present invention;
FIG. 4 is a schematic flowchart of Example 1 according to an embodiment of the present invention;
FIG. 5 is a schematic flowchart of Example 2 according to an embodiment of the present invention;
FIG. 6 is a first schematic diagram of a structure of a terminal according to an embodiment of the present invention;
FIG. 7 is a second schematic diagram of a structure of a terminal according to an embodiment of the present invention;
FIG. 8 is a first schematic diagram of a structure of a network side device according to an embodiment of the present invention; and
FIG. 9 is a second schematic diagram of a structure of a network side device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. Based on the embodiments of the present invention, all other embodiments obtained by a person of ordinary skill in the art without creative efforts fall within the protection scope of the present invention.

In the embodiments of the present invention, words such as "exemplary" or "for example" are used to indicate an example, an instance, or descriptions. Any embodiment or design scheme described as "exemplary" or "an example" in the embodiments of the present invention should not be construed as being preferable or advantageous than other embodiments or design schemes. Specifically, the words such as "exemplary" or "for example" are used to present related concepts in a specific manner.

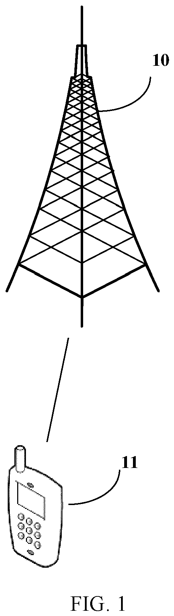

The embodiments of the present invention are described below with reference to the accompanying drawings. A cell congestion processing method, a terminal, and a network side device provided in the embodiments of the present invention may be applied to a wireless communications system. The wireless communications system may be a 5G system, an evolved long term evolution (Evolved Long Term Evolution, eLTE) system, or a subsequent evolved communications system. FIG. 1 is a schematic architectural diagram of a wireless communications system according to an embodiment of the present invention. As shown in FIG. 1, the wireless communications system may include a network side device 10 and a terminal (the terminal may also be referred to as a user side device). For example, the terminal is denoted as UE 11, and the UE 11 may be connected to the network side device 10. In actual application, a connection between the foregoing devices may be a wireless connection. To conveniently and intuitively represent a connection relationship between the devices, a solid line is used for illustration in FIG. 1.

It should be noted that the foregoing communications system may include multiple UEs, and the network side device may communicate with (transmit signaling or transmit data to) the multiple UEs.

The network side device 10 provided in this embodiment of the present invention may be a base station, and the base station may be a generally used base station, or may be an evolved node base station (evolved node base station, eNB), or may be a device such as a network side device (for example, a next generation node base station (next generation node base station, gNB) or a transmission and reception point (transmission and reception point, TRP)) or a cell in a 5G system.

The terminal provided in this embodiment of the present invention may be a mobile phone, a tablet computer, a notebook computer, an ultra-mobile personal computer (Ultra-Mobile Personal Computer, UMPC), a netbook, a wearable device (Wearable Device), a vehicle-mounted device, a personal digital assistant (Personal Digital Assistant, PDA), or the like. It should be noted that a specific type of the terminal is not limited in this embodiment of the present invention. In this embodiment of the present invention, an LTE system and an NR system are used as examples, but this system is not limited. The technical solution provided in the present invention may be applied to another system that has a same problem.

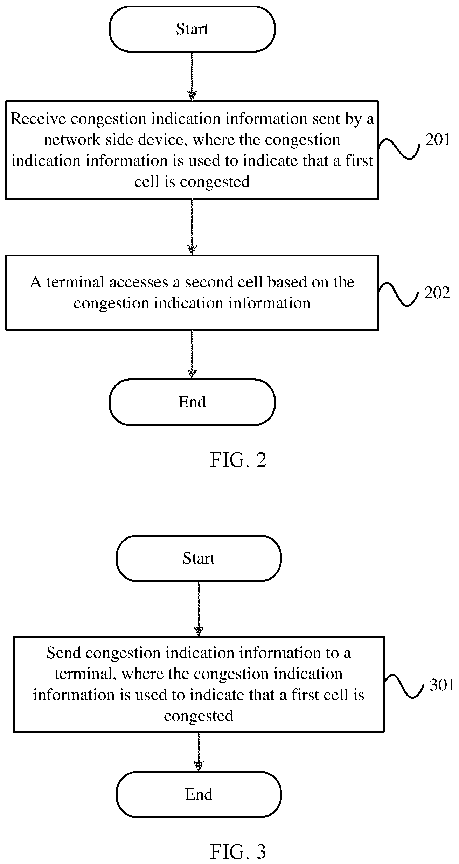

As shown in FIG. 2, an embodiment of the present disclosure provides a cell congestion processing method. The cell congestion processing method is applied to a terminal and includes the following steps:

Step 201: Receive congestion indication information sent by a network side device, where the congestion indication information is used to indicate that a first cell is congested.

The first cell is a cell on which the terminal camps, or the first cell is a serving cell of the terminal.

Step 202: The terminal accesses a second cell based on the congestion indication information.

In this step, the second cell and the first cell are different cells. Optionally, the second cell is a neighboring cell of the first cell.

Optionally, step 201 includes:
receiving N-bit information, N being an integer greater than or equal to 1; where
in a case where the N-bit information is a first value, the N-bit information is used to indicate that the first cell is congested; and in a case where the N-bit information is a second value, the N-bit information is used to indicate that the first cell is not congested.

For example, a congestion indication of a cell may be indicated by using 1-bit information. For example, "1" indicates that a corresponding cell is congested, and "0" indicates that a corresponding cell is not congested. In another example, "1" indicates that a corresponding cell is congested, and "0" or not delivering the 1-bit information indicates that a corresponding cell is not congested.

In this embodiment of the present invention, the congestion indication information sent by the network side device indicates that the first cell is congested. The terminal accesses a new cell according to the congestion indication information, so that the terminal can be prevented from accessing a congested cell and user data experience can be improved.

It should be noted that the congestion indication information may further include duration T in which a congestion indication exists in a cell, and in the duration T, the terminal considers that the cell is always congested. The indication of adding the duration T can reduce signaling interaction. For example, in the duration T, the network side does not need to further indicate whether the cell is congested.

In an optional embodiment, step 201 includes:
receiving downlink control information DCI, a media access control control element MAC CE, or radio resource control RRC signaling sent by the network side device, where the DCI, the MAC CE, or the RRC signaling carries the congestion indication information.

The MAC CE is a control field included in a MAC header of a data packet. A MAC layer is generally a scheduling control layer of a network. Therefore, the MAC CE also includes scheduling-related information. In NR, the MAC CE may be used to indicate a recommended bit rate of a logical channel, activation of various resource sets, a quasi-co-located QCL relationship, discontinuous reception of a DRX command, and the like.

Control information related to physical uplink and downlink shared channels (a physical uplink shared channel PUSCH and a physical downlink shared channel PDSCH) is transmitted on a physical downlink control channel PDCCH, that is, downlink control information (Downlink Control Information, DCI). The DCI information includes related content such as resource block RB resource allocation information, a modulation scheme MCS, and a hybrid automatic repeat request acknowledgement HARQ-ACK. Only when the terminal correctly decodes the DCI information, can the terminal correctly process PDSCH data or PUSCH data.

In this embodiment of the present invention, that the terminal accesses the second cell based on the congestion indication information mainly includes two manners. Manner 1: The terminal hands over to an idle state, and camps on the second cell through cell reselection. Manner 2: The terminal directly camps on the second cell through cell handover.

For Manner 1, step 202 includes:
The terminal enters an idle state based on the congestion indication information. For example, in a non-linked data service such as network browsing or listening to songs, the terminal generally continuously changes from the idle state to a connected state, and then to the idle state.

The terminal performs cell reselection according to a preset rule and camps on the second cell, where the preset rule includes at least one of the following:
reducing a priority of a frequency point corresponding to the first cell;
reducing an offset value of the frequency point corresponding to the first cell; and
forbidding access to a congested cell.

Optionally, to return to the idle state, the terminal needs to not only refer to the congestion indication information but also refer to whether a service requirement of the terminal is met. For example, within a preset time window, the terminal determines, based on higher layer information, that the service requirement of the terminal is not met, and a network indicates, by using the congestion indication information, that the first cell is congested, the terminal returns to the idle state, and is not reselected to the second cell.

For Manner 2, step 202 includes:
reporting, based on the congestion indication information, a measurement report corresponding to a congestion measurement event;
receiving first handover signaling sent by the network side device based on the measurement report; and
handing over to the second cell based on the first handover signaling.

Optionally, the reporting, based on the congestion indication information, a measurement report corresponding to a congestion measurement event includes:
reporting the measurement report corresponding to the congestion measurement event in a case that both a service requirement of the terminal is not met and the congestion indication information indicates that the first cell is congested.

In this embodiment of the present invention, a reporting condition of the measurement report corresponding to the congestion measurement event not only needs to refer to the congestion indication information, but also needs to refer to whether the service requirement of the terminal is met.

In an optional embodiment, the reporting the measurement report corresponding to the congestion measurement event in a case that both a service requirement of the terminal is not met and the congestion indication information indicates that the first cell is congested includes:
reporting the measurement report corresponding to the congestion measurement event in a case that both the service requirement of the terminal is not met within a time window of a preset time length and the congestion indication information indicates that the first cell is congested.

For example, within a preset time window, if the terminal determines, based on higher layer information, that the service requirement of the terminal is not met, and the network indicates, by using the congestion indication information, that the first cell is congested, the terminal reports the measurement report corresponding to the congestion measurement event, and hands over to the second cell based on the first handover signaling of the network.

Optionally, in Manner 2, before the receiving congestion indication information sent by a network side device, the method further includes:
receiving the congestion measurement event configured by the network side device for the terminal.

In the triggering condition of the congestion measurement event, a threshold of a neighboring cell is lower than a threshold of a neighboring cell in a common measurement event, so that signal quality of the neighboring cell can more easily meet the triggering condition. Preferably, the threshold of the neighboring cell in the triggering condition of the congestion measurement event is less than a preset value.

In the foregoing example, after step 202 in the foregoing embodiment of the present invention, the method further includes:
performing, by the terminal, neighboring cell measurement, and reporting a neighboring cell measurement report in a case where a condition for handover reporting event is met; where
if at least one cell in neighboring cells measured by the terminal is congested, the neighboring cell measurement report carries congestion indication information of a congested cell.

In this embodiment of the present invention, after the terminal accesses the second cell, if the measured neighboring cell meets a handover condition and congestion a neighboring cell is congested, the congestion indication information is added during measurement reporting, to notify a base station of a current serving cell that the neighboring cell is congested.

For example, when the terminal camps on the second cell, when the terminal reports the neighboring cell measurement report, if the neighboring cell measurement report includes measurement information of the first cell and the first cell is congested, the neighboring cell measurement report carries the congestion indication information of the first cell.

It should be noted that this embodiment of the present invention is not limited to a scenario of two cells. If the terminal is handed over between multiple cells, the terminal may store congestion states of multiple cells. During neighboring cell measurement reporting, the congestion indication information is also reported.

Further, after the terminal reports the neighboring cell measurement report, the network determines, based on currently obtained cell information, whether to deliver a second handover instruction. If the network delivers the second handover instruction, and the second handover instruction instructs the terminal to hand over to the first cell, if the first cell is still in the congested state, and the terminal returns to the second cell according to the previous procedure, the terminal performs neighboring cell measurement reporting.

In conclusion, in the cell congestion processing method provided in the foregoing embodiment of the present invention, the congestion indication information sent by the network side device indicates that the first cell is congested. If the terminal is in the idle state and the serving cell is congested, the terminal may be reselected to the second cell in a manner of reducing a frequency optimization level or an offset value corresponding to the serving cell. If the terminal is in the connected state and the serving cell is congested, the terminal reports the measurement report corresponding to the congestion measurement event, and hands over to the second cell based on the first handover signaling of the network. Therefore, the terminal can be prevented from accessing a congested cell, and user data experience can be improved.

As shown in FIG. 3, an embodiment of the present invention further provides a cell congestion processing method, applied to a network side device and including:

Step 301: Send congestion indication information to a terminal, where the congestion indication information is used to indicate that a first cell is congested.

The first cell is a cell on which the terminal camps, or the first cell is a serving cell of the terminal.

It should be noted that the congestion indication information may further include duration T in which a congestion indication exists in a cell, and in the duration T, the terminal considers that the cell is always congested. The indication of adding the duration T can reduce signaling interaction. For example, in the duration T, the network side does not need to further indicate whether the cell is congested.

In an optional embodiment, step 301 includes:
sending downlink control information DCI, a media access control control element MAC CE, or radio resource control RRC signaling to the terminal, where the DCI, the MAC CE, or the RRC signaling carries the congestion indication information.

The MAC CE is a control field included in a MAC header of a data packet. A MAC layer is generally a scheduling control layer of a network. Therefore, the MAC CE also includes scheduling-related information. In NR, the MAC CE may be used to indicate a recommended bit rate of a logical channel, activation of various resource sets, a quasi-co-located QCL relationship, discontinuous reception of a DRX command, and the like.

Control information related to physical uplink and downlink shared channels (a physical uplink shared channel PUSCH and a physical downlink shared channel PDSCH) is transmitted on a physical downlink control channel PDCCH, that is, downlink control information (Downlink Control Information, DCI). The DCI information includes related content such as resource block RB resource allocation information, a modulation scheme MCS, and a hybrid automatic repeat request acknowledgement HARQ-ACK. Only when the terminal correctly decodes the DCI information, can the terminal correctly process PDSCH data or PUSCH data.

In an optional embodiment, step 301 includes:
sending the congestion indication information to the terminal if at least one of following conditions is met; where the conditions include:
scheduling of other terminals by the network side device reducing a time-frequency domain resource scheduled for the current terminal;
duration in which a scheduled data packet of the terminal camps on a buffer of the network side device being greater than a first preset value;
a quantity of users served by the first cell being greater than a second preset value; and
transmission bandwidth that needs to be provided for the first cell being greater than a third preset value.

Optionally, in a case where at least one of the foregoing conditions is met, N-bit information is sent, and the N-bit information is a first value. Otherwise, N-bit indication information is sent, and the N-bit indication information is a second value; or N-bit indication information is not sent, where N is an integer greater than or equal to 1.

For example, a congestion indication of a cell may be indicated by using 1-bit information. A scheduler of the network side device needs to schedule other terminals, and scheduling of the other terminals reduces a time-frequency domain resource scheduled for the current terminal. Therefore, a network delivers one bit and set to 1 to indicate that congestion exists. If the scheduler of the network side device does not schedule other terminals to reduce a time-frequency domain resource scheduled for the current terminal, the network does not deliver the one-bit indication information, or set the one-bit information to 0, to indicate that the current terminal is not congested.

In another example, after the scheduler of the network side device finds that a scheduled data packet arrives at a buffer of the network side deice, and duration of residing in the buffer is greater than a first preset value, the bit is delivered and set to 1. In other words, the network side device cannot quickly schedule data in the buffer for various reasons, thereby causing a delay.

In another example, the network side device determines that cell congestion may be also determined based on factors such as a quantity of users served by a current cell, transmission bandwidth that needs to be provided, and a data accumulation status of the network side device, which are not enumerated one by one herein.

In an optional embodiment, after step 302, the method further includes:
receiving a measurement report corresponding to a congestion measurement event reported by the terminal; and
sending first handover signaling to the terminal based on the measurement report, where the first handover signaling is used to instruct the terminal to hand over to a second cell.

Further, before the sending congestion indication information to the terminal, the method further includes:
configuring the congestion measurement event for the terminal.

In the triggering condition of the congestion measurement event, a threshold of a neighboring cell is lower than a threshold of a neighboring cell in a common measurement event, so that signal quality of the neighboring cell can more easily meet the triggering condition. Preferably, the threshold of the neighboring cell in the triggering condition of the congestion measurement event is less than a preset value.

In conclusion, in the cell congestion processing method provided in the foregoing embodiment of the present invention, the congestion indication information sent by the network side device indicates that the first cell is congested. The terminal accesses a new cell according to the congestion indication information, so that the terminal can be prevented from accessing a congested cell and user data experience can be improved.

To describe more clearly the cell congestion processing method provided in the embodiments of the present invention, the following describes in detail with reference to two accompanying drawings and two examples.

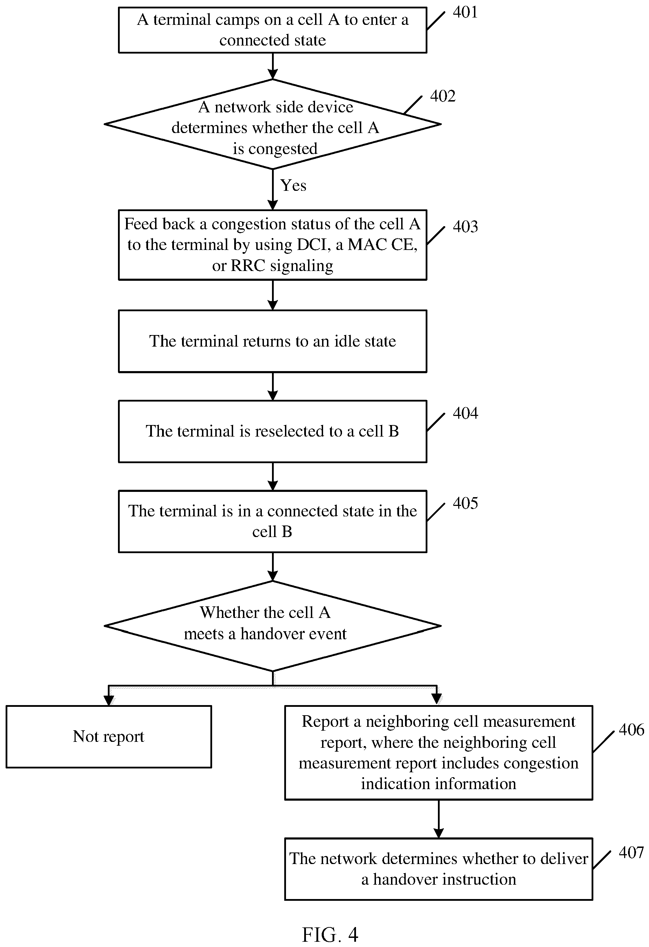

Example 1: A cell congestion processing method shown in FIG. 4 includes the following steps:
Step 401: A terminal camps on a cell A to enter a connected state.
Step 402: A network side device determines whether the cell A is congested.
Step 403: If the cell A is congested, feed back a congestion status of the cell A to the terminal by using DCI, a MAC CE, or RRC signaling, and the terminal stores the congestion status for duration T. In the time T, the terminal considers that the cell A is always congested.
Step 404: The terminal returns to an idle state, and after the terminal finds that the current cell is congested, the terminal is reselected a new cell B by reducing a frequency point priority or an offset value corresponding to reselection of the cell A or disabling the congested cell.
Step 405: The terminal is in a connected state in the cell B, and performs neighboring cell measurement.
Step 406: When it is found, during neighboring cell measurement, that the cell A meets a handover reporting event and that the cell A is congested, add a congestion indication to a neighboring cell measurement report during measurement reporting. Then, after entering the cell B by using a same procedure, the terminal may no longer perform measurement reporting.
Step 407: The network side device determines, based on the currently obtained cell, whether to deliver a handover instruction. If the network delivers the handover instruction, the terminal does not perform measurement reporting after returning to the cell B by using the same procedure.

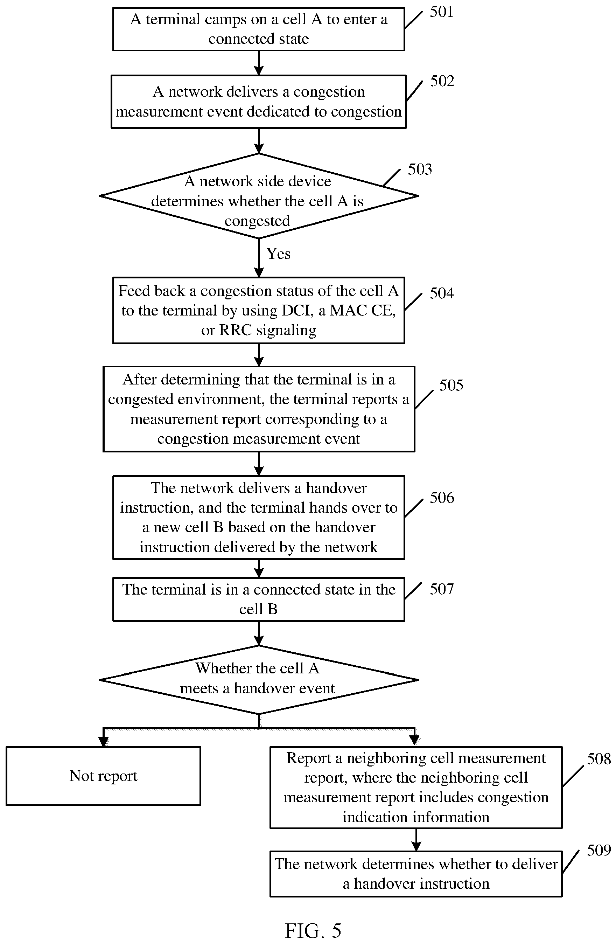

Example 2: A cell congestion processing method shown in FIG. 5 includes the following steps:
Step 501: A terminal camps on a cell A to enter a connected state.
Step 502: A network delivers a congestion measurement event dedicated to congestion. When the terminal meets a condition of a congestion measurement event, whether a current service requirement is met further needs to be determined, that is, whether congestion exists. If congestion exists, a measurement report is reported.
Step 503: A network side device determines whether the cell A is congested.
Step 504: If the cell A is congested, feed back a congestion status of the cell A to the terminal by using DCI, a MAC CE, or RRC signaling, and the terminal stores the congestion status for duration T. In the time T, the terminal considers that the cell A is always congested.
Step 505: After determining that the terminal is in a congested environment, the terminal reports a measurement report corresponding to a congestion measurement event.
Step 506: The network delivers a handover instruction, and the terminal hands over to a new cell B based on the handover instruction delivered by the network.
Step 507: The terminal is in a connected state in the cell B, and performs neighboring cell measurement.
Step 508: When it is found, during neighboring cell measurement, that the cell A meets a handover reporting event and that the cell A is congested, add a congestion indication to a neighboring cell measurement report during measurement reporting. Then, after entering the cell B by using a same procedure, the terminal may no longer perform measurement reporting.
Step 509: The network side device determines, based on the currently obtained cell, whether to deliver a handover instruction. If the network delivers the handover instruction, the terminal does not perform measurement reporting after returning to the cell B by using the same procedure.

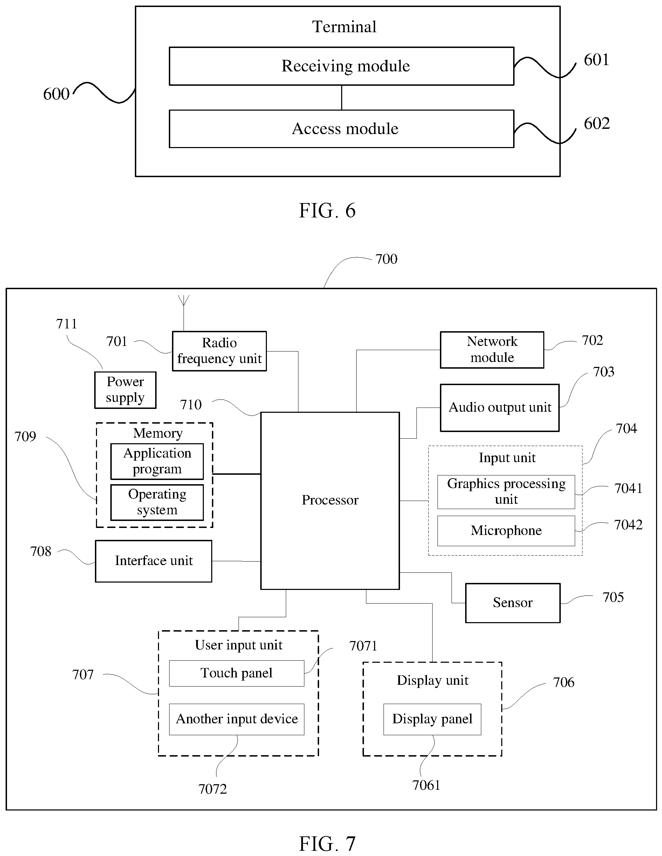

As shown in FIG. 6, an embodiment of the present invention further provides a terminal 600, including:
a receiving module 601, configured to receive congestion indication information sent by a network side device, where the congestion indication information is used to indicate that a first cell is congested; and
an access module 602, configured to access a second cell based on the congestion indication information.

Optionally, in the foregoing embodiment of the present invention, the receiving module includes:
a receiving sub-module, configured to receive downlink control information DCI, a media access control control element MAC CE, or radio resource control RRC signaling sent by the network side device, where the DCI, the MAC CE, or the RRC signaling carries the congestion indication information.

Optionally, in the foregoing embodiment of the present invention, the access module includes:
a first sub-module, configured to enter an idle state based on the congestion indication information; and
a reselection sub-module, configured to perform, by the terminal based on a preset rule, cell reselection and camp on the second cell.

Optionally, in the foregoing embodiment of the present invention, the preset rule includes at least one of the following:
reducing a priority of a frequency point corresponding to the first cell;
reducing an offset value of the frequency point corresponding to the first cell; and
forbidding access to a congested cell.

Optionally, in the foregoing embodiment of the present invention, the receiving module includes:
a receiving sub-module, configured to receive N-bit information, N being an integer greater than or equal to 1; where
in a case where the N-bit information is a first value, the N-bit information is used to indicate that the first cell is congested.

Optionally, in the foregoing embodiment of the present invention, in a case where the N-bit information is a second value, the N-bit information is used to indicate that the first cell is not congested.

Optionally, in the foregoing embodiment of the present invention, the access module includes:
a reporting sub-module, configured to report, based on the congestion indication information, a measurement report corresponding to a congestion measurement event;
a signaling receiving sub-module, configured to receive first handover signaling sent by the network side device based on the measurement report; and
a handing over sub-module, configured to hand over to the second cell based on the first handover signaling.

Optionally, in the foregoing embodiment of the present invention, the reporting sub-module includes:
a reporting unit, configured to report the measurement report corresponding to the congestion measurement event in a case that both a service requirement of the terminal is not met and the congestion indication information indicates that the first cell is congested.

Optionally, in the foregoing embodiment of the present invention, the reporting unit includes:
a reporting sub-unit, configured to report the measurement report corresponding to the congestion measurement event in a case that both the service requirement of the terminal is not met within a time window of a preset time length and the congestion indication information indicates that the first cell is congested.

Optionally, in the foregoing embodiment of the present invention, the terminal further includes:
an event receiving module, configured to receive the congestion measurement event configured by the network side device for the terminal.

Optionally, in the foregoing embodiment of the present invention, the terminal further includes:
a neighboring cell reporting module, configured to perform neighboring cell measurement, and report a neighboring cell measurement report in a case where a condition for handover a reporting event is met; where
if at least one cell in neighboring cells measured by the terminal is congested, the neighboring cell measurement report carries congestion indication information of a congested cell.

The terminal provided in this embodiment of the present invention can implement processes implemented by the terminal in the method embodiments of FIG. 2, FIG. 4, and FIG. 5. To avoid repetition, details are not described herein again.

In conclusion, in the cell congestion processing method provided in the foregoing embodiment of the present invention, the congestion indication information sent by the network side device indicates that the first cell is congested. If the terminal is in the idle state and the serving cell is congested, the terminal may be reselected to the second cell in a manner of reducing a frequency optimization level or an offset value corresponding to the serving cell. If the terminal is in the connected state and the serving cell is congested, the terminal reports the measurement report corresponding to the congestion measurement event, and hands over to the second cell based on the first handover signaling of the network. Therefore, the terminal can be prevented from accessing a congested cell, and user data experience can be improved.

It should be noted that the terminal provided in this embodiment of the present invention is a terminal that can perform the foregoing cell congestion processing method. Therefore, all embodiments of the foregoing cell congestion processing method are applicable to the terminal, and a same or similar beneficial effect can be achieved.

An embodiment of the present invention further provides a terminal, including a processor, a memory, and a computer program stored in the memory and executable on the processor. When the computer program is executed by the processor, the process of the cell congestion processing method shown in the foregoing method embodiments is implemented, and a same technical effect can be achieved. To avoid repetition, details are not described herein.

An embodiment of the present invention further provides a computer-readable storage medium. A computer program is stored in the computer-readable storage medium. When being executed by a processor, each process of the embodiment of the foregoing cell congestion processing method, and a same technical effect can be achieved. To avoid repetition, details are not described herein. The computer-readable storage medium includes a read-only memory (Read-Only Memory, ROM), a random access memory (Random Access Memory, RAM), a magnetic disk, an optical disc, or the like.

FIG. 7 is a schematic diagram of a hardware structure of a terminal for implementing the embodiments of the present invention. The terminal 700 includes but is not limited to components such as a radio frequency unit 701, a network module 702, an audio output unit 703, an input unit 704, a sensor 705, a display unit 706, a user input unit 707, an interface unit 708, a memory 709, a processor 710, and a power supply 711. A person skilled in the art may understand that a structure of the terminal shown in FIG. 7 does not constitute a limitation on the terminal, and the terminal may include more or fewer components than those shown in the figure, or combine some components, or have different component arrangements. In this embodiment of the present invention, the terminal includes but is not limited to a mobile phone, a tablet computer, a laptop computer, a palmtop computer, an in-vehicle terminal, a wearable device, a pedometer, and the like.

The radio frequency unit 701 is configured to receive congestion indication information sent by a network side device, where the congestion indication information is used to indicate that a first cell is congested.

The processor 710 is configured to access a second cell based on the congestion indication information.

In conclusion, in the cell congestion processing method provided in the foregoing embodiment of the present invention, the congestion indication information sent by the network side device indicates that the first cell is congested. If the terminal is in the idle state and the serving cell is congested, the terminal may be reselected to the second cell in a manner of reducing a frequency optimization level or an offset value corresponding to the serving cell. If the terminal is in the connected state and the serving cell is congested, the terminal reports the measurement report corresponding to the congestion measurement event, and hands over to the second cell based on the first handover signaling of the network. Therefore, the terminal can be prevented from accessing a congested cell, and user data experience can be improved.

It should be noted that the terminal provided in this embodiment of the present invention is a terminal that can perform the foregoing cell congestion processing method. Therefore, all embodiments of the foregoing cell congestion processing method are applicable to the terminal, and a same or similar beneficial effect can be achieved.

It should be understood that, in this embodiment of the present invention, the radio frequency unit 701 may be configured to receive and send information or receive and send a signal in a call process. Specifically, after downlink data from a base station is received, the processor 710 processes the downlink data. In addition, uplink data is sent to the base station. Generally, the radio frequency unit 701 includes but is not limited to an antenna, at least one amplifier, a transceiver, a coupler, a low noise amplifier, a duplexer, and the like. In addition, the radio frequency unit 701 may further communicate with a network and other devices by using a wireless communication system.

The terminal provides wireless broadband Internet access for the user by using the network module 702, for example, helping the user send and receive an email, browsing a web page, and accessing streaming media.

The audio output unit 703 may convert audio data received by the radio frequency unit 701 or the network module 702 or stored in the memory 709 into an audio signal and output as sound. In addition, the audio output unit 703 may further provide audio output (for example, call signal receiving sound or message receiving sound) related to a specific function performed by the terminal 700. The audio output unit 703 includes a loudspeaker, a buzzer, a telephone receiver, and the like.

The input unit 704 is configured to receive an audio or video signal. The input unit 704 may include a graphics processing unit (Graphics Processing Unit, GPU) 7041 and a microphone 7042. The graphics processing unit 7041 processes image data of a static picture or a video obtained by an image capture apparatus (such as a camera) in a video capture mode or an image capture mode. A processed image frame may be displayed on the display unit 706. The image frame processed by the graphics processing unit 7041 may be stored in the memory 709 (or another storage medium) or sent by using the radio frequency unit 701 or the network module 702. The microphone 7042 may receive sound and can process such sound into audio data. The processed audio data may be output by being converted into a format that may be sent to a mobile communications base station by using the radio frequency unit 701 in a telephone call mode.

The terminal 700 further includes at least one sensor 705, such as an optical sensor, a motion sensor, and another sensor. Specifically, the optical sensor includes an ambient light sensor and a proximity sensor. The ambient light sensor may adjust luminance of the display panel 7061 based on brightness of ambient light, and the proximity sensor may disable the display panel 7061 and/or backlight when the terminal 700 approaches an ear. As a type of the motion sensor, an accelerometer sensor may detect magnitude of an acceleration in each direction (generally three axes), and may detect magnitude and a direction of gravity when being static. The accelerometer sensor may be used for recognizing a terminal gesture (for example, horizontal and vertical screen handing over, a related game, or magnetometer posture calibration), a function related to vibration recognition (for example, a pedometer or a strike), or the like. The sensor 705 may further include a fingerprint sensor, a pressure sensor, an iris sensor, a molecular sensor, a gyroscope, a barometer, a hygrometer, a thermometer, an infrared sensor, and the like. This is not described herein.

The display unit 706 is configured to display information entered by the user or information provided for the user. The display unit 706 may include a display panel 7061, and the display panel 7061 may be configured in a form of a liquid crystal display (Liquid Crystal Display, LCD), an organic light-emitting diode (Organic Light-Emitting Diode, OLED), or the like.

The user input unit 707 may be configured to receive input digit or character information and generate key signal input related to user setting and function control of the terminal. Specifically, the user input unit 707 includes a touch panel 7071 and another input device 7072. The touch panel 7071, also referred to as a touchscreen, may collect a touch operation performed by the user on or near the touch panel 7071 (for example, an operation performed by the user on or near the touch panel 7071 by using any suitable object or accessory such as a finger or a stylus). The touch panel 7071 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into contact coordinates, sends the contact coordinates to the processor 710, and can receive and execute a command sent by the processor 710. In addition, the touch panel 7071 may be implemented by using multiple types such as a resistive type, a capacitive type, an infrared ray, and a surface acoustic wave. The user input unit 707 may include another input device 7072 in addition to the touch panel 7071. Specifically, the another input device 7072 may include but is not limited to one or more of a physical keyboard, a function key (such as a volume control key or an on/off key), a trackball, a mouse, a joystick, and the like. Details are not described herein.

Further, the touch panel 7071 may cover the display panel 7061. After detecting the touch operation on or near the touch panel 7071, the touch panel 7061 transmits the touch operation to the processor 710 to determine a type of a touch event, and then the processor 710 provides corresponding visual output on the display panel 7061 based on the type of the touch event. In FIG. 7, the touch panel 7071 and the display panel 7061 are used as two independent components to implement input and output functions of the terminal. However, in some embodiments, the touch panel 7071 and the display panel 7061 may be integrated to implement the input and output functions of the terminal. This is not specifically limited herein.

The interface unit 708 is an interface connecting an external apparatus to the terminal 700. For example, the external apparatus may include a wired or wireless headset port, an external power supply (or battery charger) port, a wired or wireless data port, a storage card port, a port configured to connect to an apparatus having an identification module, an audio input/output (I/O) port, a video I/O port, a headset port, and the like. The interface unit 708 may be configured to receive input (for example, data information and power) from the external apparatus and transmit the received input to one or more elements in the terminal 700, or may be configured to transmit data between the terminal 700 and the external apparatus.

The memory 709 may be configured to store a software program and various data. The memory 709 may mainly include a program storage area and a data storage area. The program storage area may store an operating system, an application program required by at least one function (such as a sound play function or an image play function), and the like. The data storage area may store data (such as audio data or an address book) or the like created based on use of the mobile phone. In addition, the memory 709 may include a high-speed random access memory, and may further include a non-volatile memory such as at least one magnetic disk storage component, a flash memory component, or another volatile solid-state storage component.

The processor 710 is a control center of the terminal, and is connected to all parts of the entire terminal by using various interfaces and lines, and performs various functions of the terminal and processes data by running or executing the software program and/or the module that are stored in the memory 709 and invoking the data stored in the memory 709, to implement overall monitoring on the terminal. The processor 710 may include one or more processing units. Preferentially, the processor 710 may be integrated with an application processor and a modem processor. The application processor mainly processes an operating system, a user interface, an application program, and the like, and the modem processor mainly processes wireless communication. It may be understood that the modem processor may also not be integrated into the processor 710.

The terminal 700 may further include a power supply 711 (such as a battery) that supplies power to each component. Optionally, the power supply 711 may be logically connected to the processor 710 by using a power management system, to implement functions such as charging, discharging, and power consumption management by using the power management system.

In addition, the terminal 700 includes some function modules not shown, and details are not described herein.

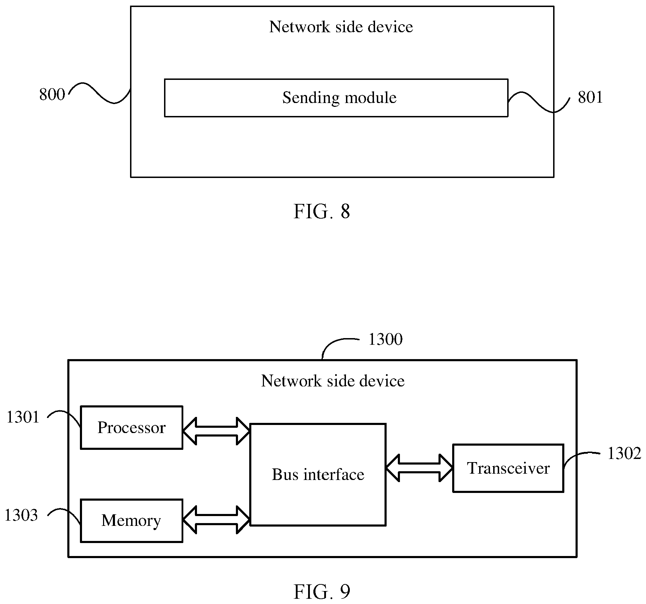

As shown in FIG. 8, an embodiment of the present invention further provides a network side device 800, including:
a sending module 801, configured to send congestion indication information to a terminal, where the congestion indication information is used to indicate that a first cell is congested.

Optionally, in the foregoing embodiment of the present invention, the sending module includes:
a first sending sub-module, configured to send downlink control information DCI, a media access control control element MAC CE, or radio resource control RRC signaling to the terminal, where the DCI, the MAC CE, or the RRC signaling carries the congestion indication information.

Optionally, in the foregoing embodiment of the present invention, the sending module includes:
a second sending sub-module, configured to send the congestion indication information to the terminal if at least one of the following conditions is met; where the conditions include:
scheduling of other terminals by the network side device reducing a time-frequency domain resource scheduled for the current terminal;
duration in which a scheduled data packet of the terminal camps on a buffer of the network side device being greater than a first preset value;
a quantity of users served by the first cell being greater than a second preset value; and
transmission bandwidth that needs to be provided for the first cell being greater than a third preset value.

Optionally, in the foregoing embodiment of the present invention, the network side device further includes:
a report receiving module, configured to receive a measurement report corresponding to a congestion measurement event reported by the terminal; and
a handover sending module, configured to send first handover signaling to the terminal based on the measurement report, where the first handover signaling is used to instruct the terminal to hand over to a second cell.

Optionally, in the foregoing embodiment of the present invention, the network side device further includes:
an event configuration module, configured to configure the congestion measurement event for the terminal.

In conclusion, in the cell congestion processing method provided in the foregoing embodiment of the present invention, the congestion indication information sent by the network side device indicates that the first cell is congested. The terminal accesses a new cell according to the congestion indication information, so that the terminal can be prevented from accessing a congested cell and user data experience can be improved.

It should be noted that the network side device provided in this embodiment of the present invention is a network side device that can perform the foregoing cell congestion processing method. Therefore, all embodiments of the foregoing cell congestion processing method are applicable to the network side device, and a same or similar beneficial effect can be achieved.

An embodiment of the present invention further provides a network side device, including a processor, a memory, and a computer program stored in the memory and executable on the processor. When the computer program is executed by the processor, the process of the cell congestion processing method shown in the foregoing method embodiments is implemented, and a same technical effect can be achieved. To avoid repetition, details are not described herein.

An embodiment of the present invention further provides a computer-readable storage medium. A computer program is stored in the computer-readable storage medium. When being executed by a processor, each process of the embodiment of the foregoing cell congestion processing method, and a same technical effect can be achieved. To avoid repetition, details are not described herein. The computer-readable storage medium includes a read-only memory (Read-Only Memory, ROM), a random access memory (Random Access Memory, RAM), a magnetic disk, an optical disc, or the like.

FIG. 9 is a structural diagram of a network side device according to an embodiment of the present invention. Details of the foregoing cell congestion processing method can be implemented, and a same effect can be achieved. As shown in FIG. 9, a network side device 1300 includes a processor 1301, a transceiver 1302, a memory 1303, and a bus interface.

The processor 1301 is configured to read a program in the memory 1303 and perform the following process:
sending congestion indication information to a terminal, where the congestion indication information is used to indicate that a first cell is congested.

In the cell congestion processing method provided in the foregoing embodiment of the present invention, the congestion indication information sent by the network side device indicates that the first cell is congested. The terminal accesses a new cell according to the congestion indication information, so that the terminal can be prevented from accessing a congested cell and user data experience can be improved.

It should be noted that the network side device provided in this embodiment of the present invention is a network side device that can perform the foregoing cell congestion processing method. Therefore, all embodiments of the foregoing cell congestion processing method are applicable to the network side device, and a same or similar beneficial effect can be achieved.

In FIG. 9, a bus architecture may include any quantity of interconnected buses and bridges, and is specifically linked by various circuits of one or more processors represented by the processor 1301 and a memory represented by the memory 1303. The bus architecture may further link various other circuits such as a peripheral device, a voltage regulator, and a power management circuit together. These are all well-known in the art, and therefore are not further described in this specification. The bus interface provides interfaces. The transceiver 1302 may be multiple elements, in other words, includes a transmitter and a receiver, and provides a unit configured to communicate with various other apparatuses on a transmission medium.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by the statement "including a..." does not exclude another same element in a process, method, article, or apparatus that includes the element.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of the present invention essentially or the part contributing to existing technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of the present invention.

The embodiments of the present invention are described with reference to the accompanying drawings. However, the present invention is not limited to the foregoing specific implementations. The foregoing specific implementations are merely examples, but are not limiting. A person of ordinary skill in the art may make many forms without departing from the objective and the scope of the claims of the present invention, and these forms all fall within the protection scope of the present invention.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A cell congestion processing method, applied to a terminal and comprising:
receiving congestion indication information sent by a network side device, wherein the congestion indication information is used to indicate that a first cell is congested; and
accessing, by the terminal, a second cell based on the congestion indication information.

2. The method according to claim 1, wherein the receiving congestion indication information sent by a network side device comprises:
receiving downlink control information DCI, a media access control control element MAC CE, or radio resource control RRC signaling sent by the network side device, wherein the DCI, the MAC CE, or the RRC signaling carries the congestion indication information.

3. The method according to claim 1, wherein the accessing, by the terminal, a second cell based on the congestion indication information comprises:
entering, by the terminal, an idle state based on the congestion indication information; and
performing, by the terminal based on a preset rule, cell reselection and camping on the second cell.

4. The method according to claim 3, wherein the preset rule comprises at least one of following:
reducing a priority of a frequency point corresponding to the first cell;
reducing an offset value of the frequency point corresponding to the first cell; and
forbidding access to a congested cell.

5. The method according to claim 1, wherein the receiving congestion indication information sent by a network side device comprises:
receiving N-bit information, N being an integer greater than or equal to 1; wherein
in a case where the N-bit information is a first value, the N-bit information is used to indicate that the first cell is congested.

6. The method according to claim 5, wherein in a case where the N-bit information is a second value, the N-bit information is used to indicate that the first cell is not congested.

7. The method according to claim 1, wherein the accessing, by the terminal, a second cell based on the congestion indication information comprises:
reporting, based on the congestion indication information, a measurement report corresponding to a congestion measurement event;
receiving first handover signaling sent by the network side device based on the measurement report; and
handing over to the second cell based on the first handover signaling.

8. The method according to claim 7, wherein the reporting, based on the congestion indication information, a measurement report corresponding to a congestion measurement event comprises:
reporting the measurement report corresponding to the congestion measurement event in a case that a service requirement of the terminal is not met and the congestion indication information indicates that the first cell is congested.

9. The method according to claim 8, wherein the reporting the measurement report corresponding to the congestion measurement event in a case that a service requirement of the terminal is not met and the congestion indication information indicates that the first cell is congested comprises:
reporting the measurement report corresponding to the congestion measurement event in a case that the service requirement of the terminal is not met within a time window of a preset time length and the congestion indication information indicates that the first cell is congested.

10. The method according to claim 7, wherein before the receiving congestion indication information sent by a network side device, the method further comprises:
receiving the congestion measurement event configured by the network side device for the terminal.

11. The method according to claim 1, wherein after the accessing, by the terminal, a second cell based on the congestion indication information, the method further comprises:
performing, by the terminal, neighboring cell measurement, and reporting a neighboring cell measurement report in a case where a condition for handover reporting event is met; wherein
in a case that at least one cell in neighboring cells measured by the terminal is congested, the neighboring cell measurement report carries congestion indication information of a congested cell.

12. A cell congestion processing method, applied to a network side device and comprising:
sending congestion indication information to a terminal, wherein the congestion indication information is used to indicate that a first cell is congested.

13. The method according to claim 12, wherein the sending congestion indication information to a terminal comprises:
sending downlink control information DCI, a media access control control element MAC CE, or radio resource control RRC signaling to the terminal, wherein the DCI, the MAC CE, or the RRC signaling carries the congestion indication information.

14. The method according to claim 12, wherein the sending congestion indication information to a terminal comprises:
sending the congestion indication information to the terminal in a case that at least one of following conditions is met; wherein the conditions comprise:
scheduling of other terminals by the network side device reducing a time-frequency domain resource scheduled for the current terminal;
duration in which a scheduled data packet of the terminal camps on a buffer of the network side device being greater than a first preset value;
a quantity of users served by the first cell being greater than a second preset value; and
transmission bandwidth that needs to be provided for the first cell being greater than a third preset value.

15. The method according to claim 12, wherein after the sending congestion indication information to a terminal, the method further comprises:
receiving a measurement report corresponding to a congestion measurement event reported by the terminal; and
sending first handover signaling to the terminal based on the measurement report, wherein the first handover signaling is used to instruct the terminal to hand over to a second cell.

16. The method according to claim 15, wherein before the sending congestion indication information to a terminal, the method further comprises:
configuring the congestion measurement event for the terminal.

17. A terminal, comprising:
a receiving module, configured to receive congestion indication information sent by a network side device, wherein the congestion indication information is used to indicate that a first cell is congested; and
an access module, configured to access, by the terminal, a second cell based on the congestion indication information.

18. The terminal according to claim 17, wherein the receiving module comprises:
a receiving sub-module, configured to receive downlink control information DCI, a media access control control element MAC CE, or radio resource control RRC signaling sent by the network side device, wherein the DCI, the MAC CE, or the RRC signaling carries the congestion indication information.

19. The terminal according to claim 17, wherein the access module comprises:
a first sub-module, configured to enter an idle state based on the congestion indication information; and
a reselection sub-module, configured to perform, by the terminal based on a preset rule, cell reselection and camp on the second cell.

20. The terminal according to claim 19, wherein the preset rule comprises at least one of following:
reducing a priority of a frequency point corresponding to the first cell;
reducing an offset value of the frequency point corresponding to the first cell; and
forbidding access to a congested cell.

21. The terminal according to claim 17, wherein the receiving module comprises:
a receiving sub-module, configured to receive N-bit information, N being an integer greater than or equal to 1; wherein
in a case where the N-bit information is a first value, the N-bit information is used to indicate that the first cell is congested.

22. The terminal according to claim 21, wherein in a case where the N-bit information is a second value, the N-bit information is used to indicate that the first cell is not congested.

23. The terminal according to claim 17, wherein the access module comprises:
a reporting sub-module, configured to report, based on the congestion indication information, a measurement report corresponding to a congestion measurement event;
a signaling receiving sub-module, configured to receive first handover signaling sent by the network side device based on the measurement report; and
a handing over sub-module, configured to hand over to the second cell based on the first handover signaling.

24. The terminal according to claim 23, wherein the reporting sub-module comprises:
a reporting unit, configured to report the measurement report corresponding to the congestion measurement event in a case that a service requirement of the terminal is not met and the congestion indication information indicates that the first cell is congested.

25. The terminal according to claim 24, wherein the reporting unit comprises:
a reporting sub-unit, configured to report the measurement report corresponding to the congestion measurement event in a case that the service requirement of the terminal is not met within a time window of a preset time length and the congestion indication information indicates that the first cell is congested.

26. The terminal according to claim 23, further comprising:
an event receiving module, configured to receive the congestion measurement event configured by the network side device for the terminal.

27. The terminal according to claim 17, further comprising:
a neighboring cell reporting module, configured to perform neighboring cell measurement, and report a neighboring cell measurement report in a case where a condition for handover reporting event is met; wherein
if at least one cell in neighboring cells measured by the terminal is congested, the neighboring cell measurement report carries congestion indication information of there is a congested cell.

28. A terminal, comprising: a processor, a memory, and a computer program stored in the memory and executable on the processor, wherein when the computer program is executed by the processor, steps in the cell congestion processing method according to any one of claims 1 to 11 are implemented.

29. A network side device, comprising:
a sending module, configured to send congestion indication information to a terminal, wherein the congestion indication information is used to indicate that a first cell is congested.

30. The network device according to claim 29, wherein the sending module comprises:
a first sending sub-module, configured to send downlink control information DCI, a media access control control element MAC CE, or radio resource control RRC signaling to the terminal, wherein the DCI, the MAC CE, or the RRC signaling carries the congestion indication information.

31. The network device according to claim 29, wherein the sending module comprises:
a second sending sub-module, configured to send the congestion indication information to the terminal if at least one of following conditions is met; wherein the conditions comprise:
scheduling of other terminals by the network side device reducing a time-frequency domain resource scheduled for the current terminal;
duration in which a scheduled data packet of the terminal camps on a buffer of the network side device being greater than a first preset value;
a quantity of users served by the first cell being greater than a second preset value; and
transmission bandwidth that needs to be provided for the first cell being greater than a third preset value.

32. The network side device according to claim 29, further comprising:
a report receiving module, configured to receive a measurement report corresponding to a congestion measurement event reported by the terminal; and
a handover sending module, configured to send first handover signaling to the terminal based on the measurement report, wherein the first handover signaling is used to instruct the terminal to hand over to a second cell.

33. The network side device according to claim 32, further comprising:
an event configuration module, configured to configure the congestion measurement event for the terminal.

34. A network side device, comprising: a processor, a memory, and a computer program stored in the memory and executable on the processor, wherein when the computer program is executed by the processor, steps in the cell congestion processing method according to any one of claims 12 to 16 are implemented.

35. A computer-readable storage medium, wherein the computer-readable storage medium stores a computer program, and when the computer program is executed by a processor, steps in the cell congestion processing method according to any one of claims 1 to 11 are implemented, or when the computer program is executed by a processor, steps in the cell congestion processing method according to any one of claims 12 to 16 are implemented.
